(19) **Europäisches Patentamt European Patent Office Office européen des brevets**

(11) **EP 4 208 335 B1**

(12) **EUROPEAN PATENT SPECIFICATION**

(45) Date of publication and mention
of the grant of the patent:
**11.06.2025 Bulletin 2025/24**

(21) Application number: **21777584.0**

(22) Date of filing: **02.09.2021**

(51) International Patent Classification (IPC):
***B31F 1/07*** *(2006.01)*      ***B44B 5/02*** *(2006.01)*
***B44C 1/22*** *(2006.01)*      ***B29C 45/37*** *(2006.01)*

(52) Cooperative Patent Classification (CPC):
**B31F 1/07; B44B 5/026;** B23K 26/3576;
B23K 26/364; B29C 45/372; B31F 2201/072;
B44C 1/228

(86) International application number:
**PCT/IB2021/058002**

(87) International publication number:
**WO 2022/049510 (10.03.2022 Gazette 2022/10)**

(54) **A METHOD AND SYSTEM FOR MANUFACTURING AN EMBOSSING DEVICE AND CORRESPONDING EMBOSSING DEVICE**

VERFAHREN UND SYSTEM ZUR HERSTELLUNG EINER PRÄGEVORRICHTUNG

PROCÉDÉ ET SYSTÈME DE FABRICATION D'UN DISPOSITIF DE GAUFRAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.09.2020 EP 20194368**

(43) Date of publication of application:
**12.07.2023 Bulletin 2023/28**

(73) Proprietor: **Boegli-Gravures S.A.**
**2074 Marin-Epagnier (CH)**

(72) Inventors:
• **BOEGLI, Charles**
 **2074 Marin-Epagnier (CH)**

• **DUMITRU, Gabriel**
 **5415 Nussbaumen (CH)**

(74) Representative: **Weihs, Bruno Konrad**
 **André Roland SA**
 **IP Attorneys & Services**
 **Avenue Collonges 21**
 **1004 Lausanne (CH)**

(56) References cited:
EP-A1- 2 441 593      EP-A1- 2 653 301
DE-U1- 202017 105 458      US-A1- 2018 264 588
US-A1- 2019 193 198      US-B2- 9 993 895

**Description**

FIELD OF THE INVENTION

The present invention is directed to the field of embossing devices, such as embossing rollers, rolls, drums, cylinders, and plates, more specifically to the field of methods for manufacturing embossing devices having embossing structures on the outer surfaces, and a corresponding manufacturing system, for example for embossing devices for embossing packaging materials, the use of such embossing devices for embossing packaging materials.

BACKGROUND

In the state-of-the-art, different methods have been proposed to manufacture embossing rollers for different application fields. For example, embossed or structured packaging foils have been used in various industry sectors for packaging, for example for tobacco products, food products such as chocolate, sweets, candy, but also for devices such as electronic components and devices, jewelry, watches, or as wrapping packaging foils for gift packaging for any retail sector. For example, so-called inner liners having specific patterns have been used that can be wrapped around cigarettes, cigars, chocolates for esthetic and protection purposes. The embossing roller can be used in a continuous roll-to-roll (R2R) manufacturing process, where thin foils are embossed with embossed patterns that can include metallic, transparent conductive, non-metallic, dielectric, etc. elements. Another application field is the creation of embossed patterns using a thermoplastic film, with a hot embossing process, for example by R2R or a roll-to-plate (R2P) process, for example hot embossing of thermoplastic polymer films. See for example Peng et al., "Micro Hot Embossing of Thermoplastic Polymers: a Review," Journal of Micromechanics and Microengineering, Vol. 24, No. 1, p. 013001, 2013.

With respect to the manufacturing of embossing rollers or drums by a laser process for a cooperating pair of rollers, U.S. Patent No. 9,579,924 describes a method for manufacturing a set of embossing rollers having a male roller and female roller, the structural elements thereof having specific structural features with respect to voluntary deviations of linear and angular dimensions. The structuration of the set of embossing rollers are manufactured independently by laser device L12 that has a laser 12 and a deflection unit 14 that may comprise beam splitters as well as acoustic-optical or electro-optical modulators or polygon mirrors. Deflection unit 14, focusing optics 15, and deflection mirror 16 form engraving unit 17 that is linearly displaceable in the x-axis. The work piece is driven by a drive 23, which is symbolized by rotation angle $\varphi$. By the combination of the linear displacement of the engraving unit and of the rotation of the roller, a constant helical line SL is created that allows a uniform machining.

Moreover, U.S. Patent No. 8,435,373 describes different R2R process/apparatus for forming desired patterns on a flexible substrate by removal and/or addition of material, where a rotary patterning tool having an embossing surface with embossments in a roll-to-roll embossing process is performed, for example for In-Situ Mask Layer can be made with numerous materials and by various techniques suitable for forming polymeric three-dimensional (3D) relief patterns.

Furthermore, in U.S. Patent No. 9,993,895 a laser-processing method for engraving embossing rollers is described, that are coated with a very hard surface coating, for example tetrahedral amorphous carbon (Ta-C), to provide for two superposed and very small embossing structures that can have dimensions that are smaller than one micrometer, preferably having a depth of 300 nm. This allows embossing foils that will have different visible multi-chromatic optical diffraction effects.

In addition, U.S. Patent No. 10,183,318 describes a method for structuring a surface of a steel embossing roller, the embossing roller made of a heterogeneous, high-alloyed iron base material, the method using a laser-processing system with a laser using specific laser-processing parameters for high laser deflection velocities, where deflection velocities up to 100 m/s and above are possible, to form structure depths between 60 $\mu$m to 200 $\mu$m.

In addition, in U.S. Patent Publication No. 2017/0066079 a device for the mask projection of femtosecond or picosecond laser beams 2 onto a substrate surface is described, in which the laser beam 2 consisting of laser-beam pulses is, at a location of the optical axis, formed to make laser beam pulses with an expanded laser-beam cross section or laser-beam pulses with a reduced laser-beam cross section, and where specific vacuum cuvettes 18, 20, 23 are used to avoid a formation of plasma at location of laser focusing points 17, 19, 22, one of the vacuum cuvettes 20 having a pinhole aperture 26 close to the workpiece, a surface 12 of a substrate 13 that is subject to laser ablation.

However, despite all the improvements to the processes for manufacturing embossing devices, such as a roller, drum, or plate, and the different applications fields, novel and substantially improved methods and resulting embossing devices are still desired, specifically to emboss different types of substrates to create a larger diversity of embossing structures on the outer surface, and to provide embossing devices such as rollers having substantially improved durability and lifecycle. For example, one problem that has been identified is the presence of rather high surface roughness on otherwise planar or curved inner surfaces, especially for surfaces that lie inside the embossing structures themselves, that can lead to high abrasion and undesired optical effects in the ultimately embossed films and foils, for example creating optical blur and a reduction of the optical qualities of these structures.

## SUMMARY

According to one aspect of the present invention, a method for manufacturing an embossing device for embossing system is provided. Preferably, the method includes the steps of providing a hard-coated embossing roller having a cylindrically-shaped core and a hard-coating layer, the hard-coating layer having a thickness of less than 30 $\mu$m, and performing laser ablation to the hard-coated cylinder to remove material from the hard-coating layer to form opening, a surface of the opening forming a structural feature into the hard-coating layer, to form a structured hard-coated cylinder. Moreover, the method can further preferably include a step of polishing a surface of the structured hard-coated cylinder to smoothen interior surfaces of the structural feature.

According to another aspect of the present invention, an embossing device is provided. Preferably, the embossing device includes a base, an adhesion layer arranged on the base, a hard-coating layer arranged on the adhesion layer having a thickness of equal or less than 30 $\mu$m, and an embossing structuration arranged in a surface of the hard-coating layer. Moreover, preferably, the embossing structuration includes periodical structures, such as grooves for a grating, in a plurality of angular orientations, or a matrix of dots or squares. Preferably, the depth of the structuration is between 1 $\mu$m and 10 $\mu$m. The period of the grating is ranging from 1 $\mu$m to 10 $\mu$m. The matrix of dots or squares is arranged according to a rectangular or a hexagonal grid or lattice, where the periodicity is ranging from 1 $\mu$m to 10 $\mu$m. Preferably, the ratio between the depth and the width of the structures is in a range between 0.25 and 1.2.

According to still another aspect of the present invention, an injection mold is provided. Preferably, the injection mold includes a base, an adhesion layer arranged on the base, a hard-coating layer arranged on the adhesion layer having a thickness in a range between 1 $\mu$m than 30 $\mu$m, and a surface structuration arranged in a surface of the hard-coating layer, wherein the surface structuration is utilized as a mold structure.

The above and other objects, features and advantages of the present invention and the manner of realizing them will become more apparent, and the invention itself will be understood best from a study of the following description and appended claims with reference to the attached drawings showing some preferred embodiments of the invention.

## BRIEF DESCRIPTION OF THE SEVERAL VIEWS OF THE DRAWINGS

The accompanying drawings, which are incorporated herein and constitute part of this specification, illustrate the presently preferred embodiments of the invention, and together with the general description given above and the detailed description given below, serve to explain features of the invention.

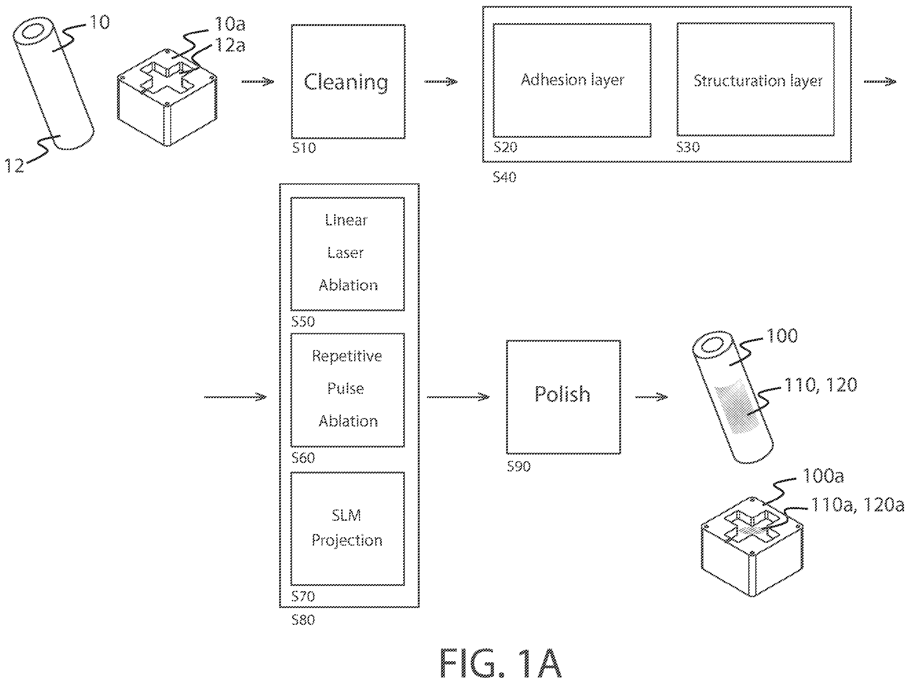

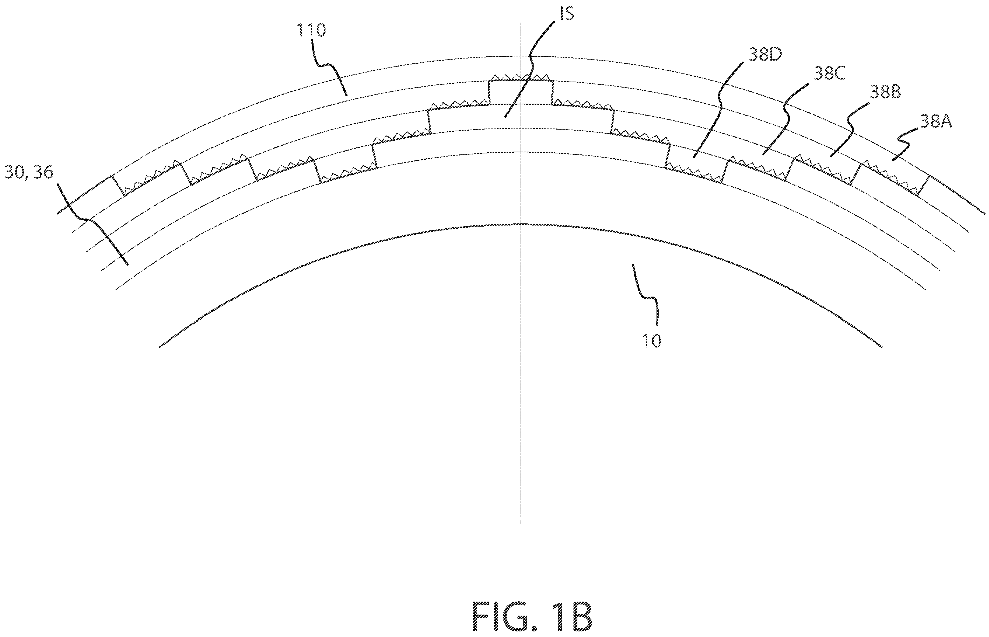

FIG. 1A shows a schematic overview of the steps of the method for manufacturing an embossing device 100, 200 in the variant shown an embossing roller or drum 100 or a plate 200, according to one aspect of the present invention, and FIG. 1B shows a cross-sectional exemplary view of the core 10 or plate or base 10a after being processed by a laser ablation step, for layer- or shell-wise removal of hard coating material from structuration-bearing layer 30 to form a three-dimensional structure of structuration 110, 110a;

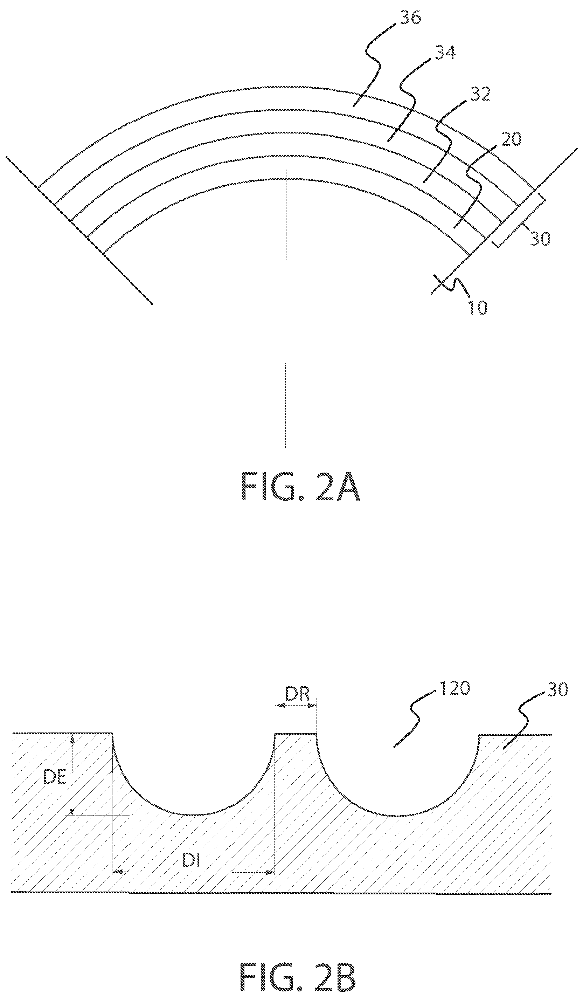

FIG. 2A to 2B show cross-sectional views of a cylindrically-shaped metal cylinder or core 10, with FIG. 2A showing a section of the core 10 that has been coated with an adhesion layer 20 and a structuration-bearing layer 30, and FIG. 2B shows a spherical sink 120 that has been formed into a structuration-bearing layer 30;

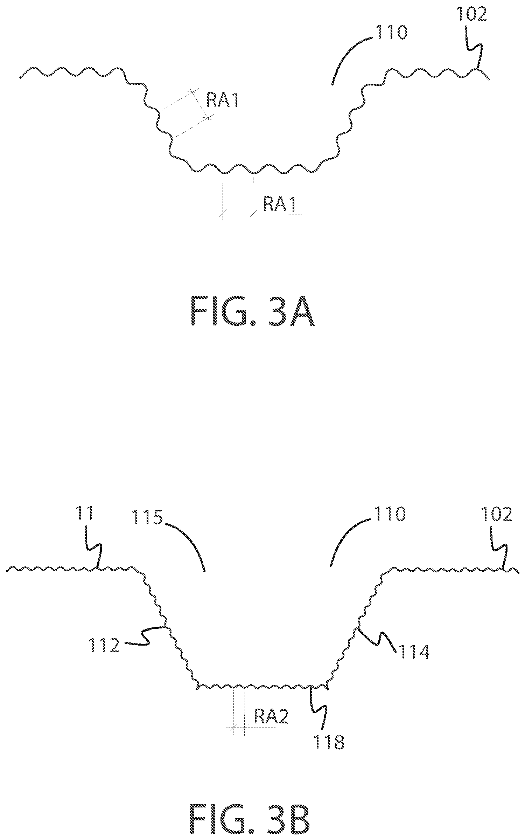

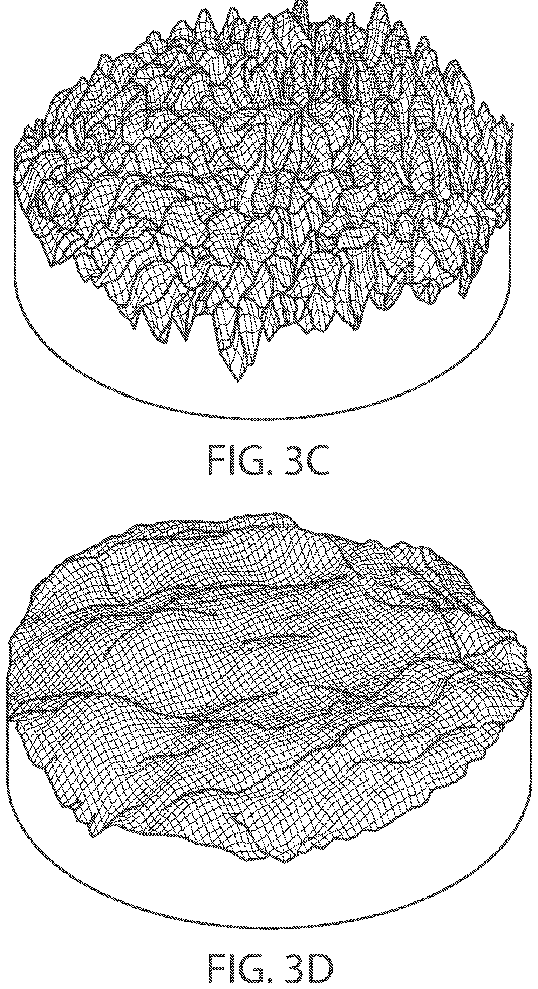

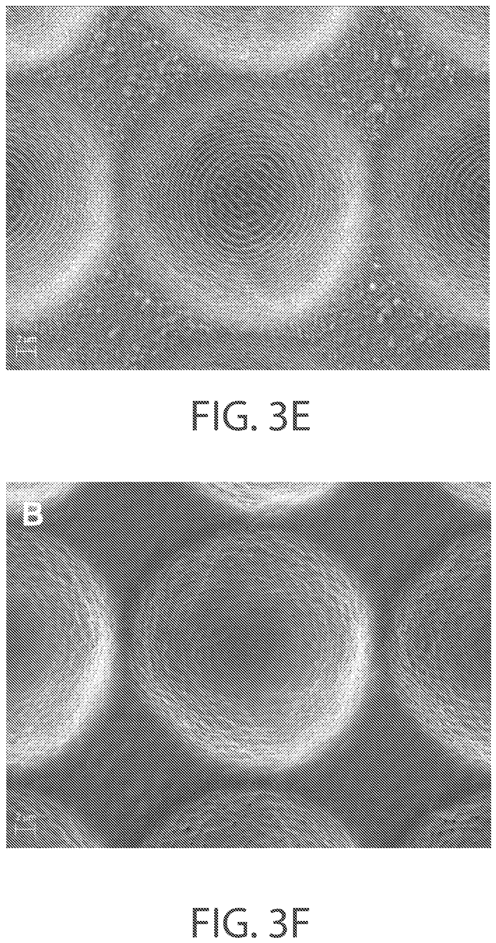

FIGs. 3A to 3F show different exemplary representations of an exposed surface 102 of an embossing device 100 before and after the polishing step S70, with FIGs. 3A and 3B showing two cross-sectional views of an exposed surface 102 of an embossing roller or drum 100 before and after the polishing step S70, where the surface roughness inside the structures 110, 120 is strongly improved, FIGs. 3C and 3D showing a top perspective view of a reconstruction of the surface based on microscopic images before and after polishing step S90, and FIG. 3E and 3F showing scanning-electron microscope (SEM) images of spherical sinks 120; and

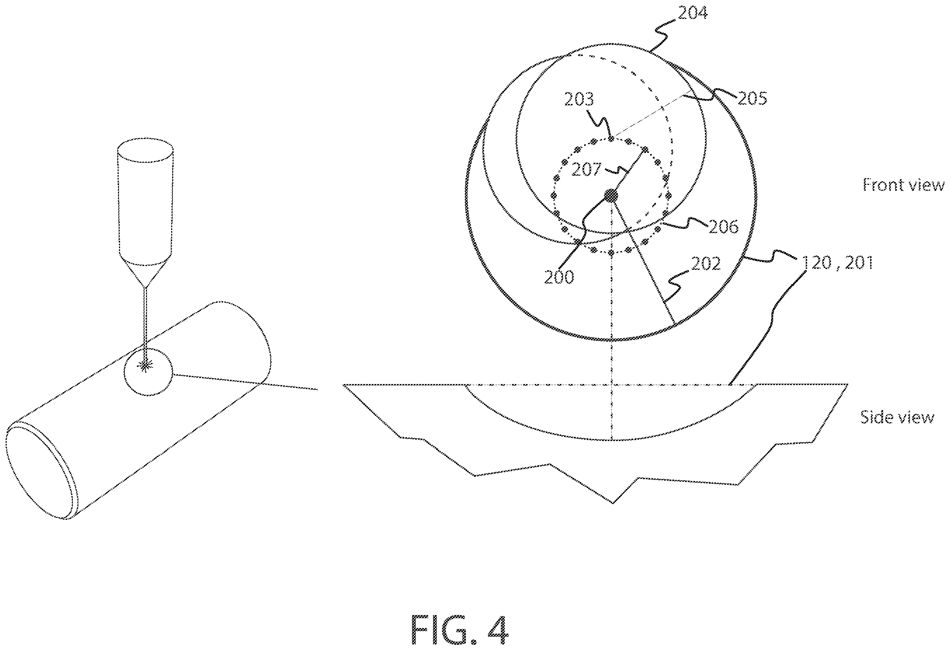

FIG. 4 shows a schematic representation of a method for engraving of spherical sinks 120 to a hard-coated surface.

Herein, identical reference numerals are used, where possible, to designate identical elements that are common to the figures. In addition, the images in the drawings are simplified for illustration purposes and may not be depicted to scale.

## DETAILED DESCRIPTION OF THE EMBODIMENTS

First, the different steps of a method for manufacturing an embossing roller or drum 100 is explained, and an exemplary schematic representation of the method is shown in FIG. 1. A cylindrically shaped metal cylinder or core 10 is provided, serving as a base for the embossing roller. A diameter of the metal cylinder or core 10 can be in a range between 50 mm and 500 mm, but other diameters are also possible. Next, the cylindrically shaped metal cylinder or core is processed to have an outer cylindrical surface 12 with a smooth surface and specific hardness. Preferably, the metal cylinder or core has been processed such that it has a surface roughness with a surface profile roughness parameter (RA) preferably to be below 150 nm, more preferably below 50 nm, more preferably in a range between 10 nm to 30 nm. With respect to the hardness, the outer cylindrical surface 12 preferably can have a certain hardness above 0.5 GPa. Both the hardness value and the surface roughness value are application-specific, as these values in these ranges will allow providing for an embossing roller having a specific durability and allows operation and a desired nip pressure, and will also allow manufacturing embossing structures of a certain level of granularity, as further explained below. For example, a surface roughness of the outer cylindrical surface 12 needs to be substantially better, i.e., less rough than the embossing patterns that will be manufactured.

In a variant, core 10 is a hollow cylinder having a traversing bore along its rotational axis, so that an embossing device 100 having a reduced weight can be provided, or can be more easily mounted or installed to a bolt or rod for installation to an embossing or other type of machine, or can be used for installing rotational bearings inside traversing bore. In another variant, the core 10 need not be made of metal, but can be a composite material such as a hard-metal material, a sintered material, for example but not limited to a cermet.

Thereafter, metal cylinder or core 10 is processed by a cleaning step S10 where the outer surface 12 of core 10 is degreased and thoroughly cleaned. For example, cleaning step S10 can include a step of subjecting the metal cylinder or core 10 to a cleaning apparatus where the cylinder is cleaned by complete immersion in a bath of demineralized water and detergents in a special cleaning machine capable of generating ultrasonic cleaning cycles, followed by the possible use of an oxidation inhibitor in the last rinsing step when the detergent is removed from the surface. Then, the cleaned metal cylinder or core 10 is provided to a vacuum chamber of a deposition system, for example a physical vapor deposition (PVD) device or system having a coating chamber for further processing.

Next, the coating chamber is evacuated and heated, and the metal cylinder or core 10 is rotated around its rotational axis. Next, the surface of the metal cylinder or core 10 is exposed to a plasma-cleaning process using, e.g., Argon plasma to activate the surface before a coating is deposited and to remove organic traces left on the surface. Next, in a step S20, an adhesion layer 20 is deposited onto the outer cylindrical surface 12 of the metal cylinder or core 10 by a form of PVD or chemical vapor deposition (CVD), or a combination thereof, for example reactive sputter deposition or plasma-enhanced chemical vapor deposition (PECVD). The adhesion layer 20 is preferably between several tens and several hundreds of nanometers thick.

Next, in a step S30, a structuration-bearing layer 30 is deposited onto the adhesion layer 20, preferably inside the same processing chamber as the adhesion layer without opening the processing chamber, while the metal cylinder or core 10 with adhesion layer 20 is rotated around its rotational axis. The structuration-bearing layer 30 is substantially thicker than adhesion layer 20, for example having a thickness of 30 $\mu$m or less, preferably in a range between 1 $\mu$m and 30 $\mu$m, more preferably in a range between 5 $\mu$m and 20 $\mu$m, for example about 10 $\mu$m thick. The structuration-bearing layer 30 is preferably made from a hard material, preferably from a non-metallic inorganic hard material, more preferably a hard-ceramic material, for example Titanium Nitride (TiN) or Chromium Nitride (CrN). In a more general manner, the hard-ceramic material may comprise nitrides, carbides, carbonitrides of one of the following elements: B, Al, Si, Cr, Ti or any combination of these single layers in a multi-layer structure. The deposition steps S20 and S30, preferably carried out by a PEPVD or CVD process, are performed by rotating the metal cylinder or core 10 around its rotational axis with a rotation device and simultaneously exposing the cylindrical surface 12 to a highly energetic plasma contained and maintained by a magnetic field between the top and bottom electrode of a plasma processing chamber, with the cathode representing the sputtering target.

The hard coatings of the adhesion layer 20 of step S20 and the structuration-bearing layer 30 of step S30 can be comprised of one homogenous layer, a stack of chemically or structurally different layers, or of internally nanostructured layers where distinct phases inside the layer are formed through defined phase separation, or any combination thereof.

Moreover, in a variant, the PEPVD deposition of step S30 for forming the structuration-bearing layer 30 can include multiple depositions to create the multi-layer structure, for example TiN/AlCrN/TiN layers 32, 34, 36, as shown in FIG. 2A in a cross-sectional view. In this variant, structuration-bearing layer 30 can be made of a plurality of layers, preferably a plurality of non-metallic inorganic coatings, for example hard ceramic coatings for layers 32, 34, 36, for example a first layer 32 in contact with adhesion layer 20 that is made of TiN, a second layer 34 in contact with first layer 32 that has the purpose of a mechanical interface layer, preferably made of Aluminum Chromium Nitride (AlCrN) or Aluminum Titanium Nitride (AlTiN), and a third layer 36 that is made of TiN or in a variant AlCrTiN. The thicknesses of the individually discernible layers can range from several tens of nanometers to several microns.

At this stage in the method, the outermost cylindrically-shaped exposed surface of processed metal cylinder or core 10, being either the outer surface of structuration-bearing layer 30 or outer surface the last layer of the multilayer structure, the outer structuration-bearing layer 36, in both cases being a previously-deposited hard layer, needs to have a very small surface roughness, preferably having a surface profile roughness parameter (RA) to be below 300 nm, preferably between 50 nm to 150 nm. This low roughness value is provided by the use of a metal cylinder or core 10 having an even lower surface profile roughness parameter RA, as described above.

Next, in the step S80 the laser ablation of structures in a portion of the structuration-bearing layer 30 or outer surface the last layer of the multilayer structure, being the outer structuration-bearing layer 36, is performed. With the laser ablation step S80, structural features 110, 120 for the embossing patterns are formed in an outer cylindrical surface by removal of the PEPVD-deposited hard material. For this laser-processing step S80, in one variant it is possible that the cylinder or core 10 is rotated about its rotational axis, and a pulsed laser-ablation beam is used to run linear ablation cycles along a line on the cylindrical surface that is parallel to the rotational axis, herein called linear laser ablation S50, to remove a part of the surface of the cylinder, being a cylindrical shell having a depth corresponding the ablation depth, and these ablation cycles are repeated for a deeper depth towards the rotational axis. In this respect, a first layer of material being a part of a cylindrical shell is removed by laser ablation, for example having a thickness of about 300 nm to 1 $\mu$m depending on the ablation depth, and thereafter, the laser focal spot is approached by 300 nm to 1 $\mu$m towards the rotational axis, and a second layer of material can be removed, forming a part of a cylindrical shell with a radius that is smaller by 300 nm to 1 $\mu$m as compared tom the first layer. These layer-by-layer material-ablation steps can be repeated to remove layer by layer, to create embossing structures having a 3D shape, and reaching depths from the outer surface of processed metal cylinder or core 10 of 10 $\mu$m or more, for example up to depths of 20 $\mu$m, preferably in a range between 1 $\mu$m and 20 $\mu$m, while still remaining inside the structuration-bearing layer 30.

The machining parameters for the individual ablation layers such as ablation thickness, pulse-to-pulse overlap, linear scanning speed, laser power, energy per laser pulse, etc. are tuned according to structural features 110 that are formed by laser ablation with step S50 into structuration-bearing layer 30, or outer structuration-bearing layer 36, to form 3D structures, with respect to minimum structural feature size, side-wall angling, and other structural specifications, and the exact layering and microstructure of the structural features 110 of structuration-bearing layer 30, or outer structuration-bearing layer 36, i.e., the number of sub-layers, the crystalline structure, machinability, etc. This will allow achieving high, industrially utilizable throughput paired with high surface quality of the final 3D micro-structured hard-coated surface.

With respect to a shape of structural features 110 that form 3D structures, given the relatively large thickness of structuration-bearing layer 30 or outer structuration-bearing layer 36 that are made of a hard material, preferably up to 30$\mu$m, and the multilayer removal of material from layers 30, 36 by step S80, material is removed to form 3D structures to leave behind structural features 110 having a certain depth that is substantial, but does not exceed a thickness of layers 30, 36, respectively. The 3D structures can get their shapes, for example by removing three (3) or more layers, for example layers 38A to 38D, of material by a series of laser ablation cycles within step S80. Each new ablated layer or shell has a smaller surface area than the last one, so that the surface area of the structures can shrink with each layer as the ablation digs deeper in the structuration-bearing layer 30. As another example, it is possible to remove material by step S80 such that islands IS or structures are formed within an opening that is formed by surface cavity or recess of structural features 110 as shown in FIG. 1B in a cross-sectional view, in the embodiment showing four (4) shells or layers of removed material. Each cylindrical shell 38A to 38D of removed material by surface laser ablation is closer to center axis CA of core 10, and it can be seen how one or more islands IS can be formed from layers 30, 36, respectively, whereas with each shell or layer of removed material 38A to 38D, less material has been removed, which can be expressed as the reduced surface area as a function of a proximity to a center axis of cylindrical core 10. For example, in this variant, each removed layer 38A to 38D can have a thickness of 800 nm in a radial direction, with the total structuration having a maximal depth of 3.2 $\mu$m. In addition, the radial dimensions in a depth direction of the shapes that are formed by structural features 110 can be very small, for example below 1 $\mu$m, even below 300 nm, allowing for the creation of 3D structures on a fine scale.

The laser processing of step S50 can be performed with an ultrafast-pulsed laser (picosecond or femtosecond type). For example, using a laser with a wavelength ranging between 250 nm and 1100 nm, an average power ranging between 0.5 W and 2 W, a pulse duration ranging between 100 fs and 1 ps and a pulse-repetition frequency ranging between 100 kHz and 20 MHz. An F-Theta lens focuses the laser, to create a focusing point FP with a diameter between 2 $\mu$m and 30 $\mu$m, where the intensity profile of the beam presents a Gaussian distribution. For the engraving of the structures by ablation of hard-coated material, a laser fluence above the ablation threshold of the material must be chosen, in the case with TiN, a fluence of 0.7 J/cm2 can be chosen. In a variant, the laser used can be more powerful to reach a fluence between 10 J/cm2 and 20 J/cm2. This allows forming grooves of a certain length and depth with an increased material removal rate. The movement of the laser focusing point FP along the ablation lines can be continuous such that the laser focusing point FP is always in linear motion relative to a position along the rotational axis of the core 10, for example by using a laser scanner or by linearly moving the laser relative to the metal cylinder or core 10. The laser-scanning speed at an ablation location of the metal cylinder or core 10 can be in a range between 0.1 m/s and 20 m/s, for example around 5 m/s. The scanning speed depends on many other laser-processing parameters, which can include but is not limited to the laser power, focal length, laser frequency, resolution of the engraved structures.

A result of this step is an embossing roller or drum 100, having a surface structuration engraved into the outer cylindrical surface, being a structuration 110 that is formed solely inside the structuration-bearing layer 30 or the last layer of the multilayer structure, the outer structuration-bearing layer 36. With step S50 it is possible to create relatively complex 3D embossing structures into the structuration-bearing layer, having a depth in a radial direction of up to 20 μm, for example about 10 μm.

The laser engraved grooves formed as structural features 110 can be engineered to improve the properties of the surface. For example, these grooves can reduce the fluid-drag in turbulent flow. See for example Lang et al., "Shark Skin Drag Reduction," Encyclopedia of Nanotechnology, Vol 19, pp. 2394-2400, year 2012. In another example, these groves can be arranged to create microfluidic structures like channels, flow resistors, pumps, valves, inlets and other capillary structures, see for example Olanrewaju et al. "Capillary Microfluidics in Microchannels: From Microfluidic Networks to Capillary Circuits," Lab on a Chip, Vol. 18, No. 16, pp. 2323-2347, year 2018. These microfluidic channels have lateral dimensions between 1 μm and 500 μm and a height varying between 1 μm and 200 μm.

Comparing the thickness of structuration bearing layer 30, 36, the maximal depth of the structural features 110 in a radial depth direction is preferably more than half the depth of the thickness of the structuration-bearing layer 30, 36, thereby forming relatively deep engraved cavities or openings. For example, a maximal radial depth of one structural feature 110 can be in a range up to 95% of the thickness of structuration bearing layer 30, 36, more preferably in a range between 55% and 90%. For example, given that the thickness of structuration bearing layer 30, 36 could be 10 μm, a maximal radial depth of structural features 110 can be maximally 9 μm. Generally, the grooves, sinks, or indentations that are formed as structures 110 by the linear laser-ablation step S50 have a depth such that the structuration are fully inside the structuration-bearing layer 30, 36, and do not exceed a thickness of the structuration-bearing layer 30, 36. In a variant, the maximal depth of the cavity of structural features 110 can also exceed the thickness of structuration-bearing layer 30, 36, and can reach into adhesion layer 20, and can even traverse adhesion layer 20 and reach into roll, core or base 10. Generally, with relatively deep cavities that are formed by structural features 110, as specified above, it is possible to substantially reduce internal stresses and tensions of structuration-bearing layer 30, 36, and provide for a mechanically more resilient behavior.

Moreover, the surface structuration of the embossing roller or drum 100 is formed to have specific properties in terms of dimensions that are suitable for specific applications. For example, for hot embossing of thermoplastic polymers, roller or drum 100 can be used as a hot embossing tool with thermoplastic embossing structures 110 that can be formed in the shape of grooves, sinks, or both that are relatively deep in a direction that is radial to the cylindrical shape of roller 100 relative to their width in any direction within a tangential plane at a location of the groove or sink. Also, for example, a depth of a groove can be in a range between 1 μm and 10 μm, a width of the same groove can be in a range between 1 μm and 20 μm, whereas a ratio between the depth and the width of the groove is preferably in a range between 0.25 to 2, more preferably between 0.8 and 1.2. It is also possible that the depth is higher than the width, which means the depth/width ratio is above 1. Also, it is possible the repetitive patterns are formed, for example a series of lines that are arranged substantially in parallel to each other, or a matrix of dots or squares that form structures 110, that are arranged according to a rectangular or a hexagonal grid or lattice, for example period grooves, sinks, ramp, saw-tooth patterns, having a periodicity in a range between 1 μm and 10 μm.

In another variant, a step S60 is performed for the engraving of spherical sinks 120. To engrave a single spherical sink 120, a repetitive pulse ablation by the ablating laser beam is performed. Moreover, preferably, the size of the laser-focusing point FP used for ablation in step S60 is smaller than the lateral dimension of the spherical sinks to be engraved by ablation. Since the energy distribution in the laser-focusing point FP is Gaussian, it is necessary to adjust the ablation position for each repetition pulse so that the resulting sink is as close as possible as a perfect sphere. FIG. 4 shows a schematic and exemplary representation of this method step S60 to engrave the spherical sink using a Gaussian laser beam. To best approximate the spherical shape of the sink 120, 201, the focusing point 204 has a radius 205 smaller than the radius of the desired spherical sink 202. For example, the focusing point can have a radius of 8 μm for a desired sink radius of 12.5 μm. The center of the focusing point 203 is moved around the center of the sink 200 following a circle 206 of radius 207. The radius of the circle 206 is 3 μm to 6 μm, depending on the fluence used. As an example, for making one spherical sink with step S60, the laser is triggered on sixteen (16) different equidistant locations on the circle 206. Triggering the laser on these 16 different locations can be repeated several times until the desired depth is reached, for instance a depth of 10 μm.

The step S60 of forming spherical sinks 120 can be preceded by some optional preparation steps for (i) determining the appropriate ablation rate and (ii) defining the layer-by-layer strategy. The ablation rate can be defined as the thickness of material removal from structuration-bearing layer 30 or outer structuration-bearing layer 36, engraved layer by a single pass and/or pulse of the laser beam. The appropriate ablation rate can be determined in preliminary tests, for example by the use of a separate piece of material having the same hard-coating as layers 30, 36, respectively, in which defined parameters, e.g., pulse energy, repetition rate, of the ablation laser beam are varied and the resulted engraving depths of the thus created spherical sinks 120 are measured. By carrying out these tests, an inverse correlation between the ablation rate and the sink roughness of the laser ablated spherical sink 120 can be found; the optimal choice will be the highest ablation rate, i.e., highest throughput, still leading to the aimed bottom roughness. Preferably, ablation rates per laser pulse to obtain the roughness values mentioned above vary between 0.05 $\mu$m and 1 $\mu$m per layer. Once the ablation rate $h$, i.e., the elementary depth corresponding to a single pass or pulse of the laser beam is determined, the ratio between the desired depth H of the spherical sink 120 to be engraved and the ablation rate $h$ will yield the number $n$ of pulses or passes can be approximated as follows.

$$n = H / h$$

A repetitive ablation by n pulses, n passes, or n cycles with ablation laser will lead to a spherical sink 120 having a depth H, each time removing a layer of material having a depth h.

FIG. 2B shows an exemplary cross-sectional view of one of such spherical sinks 120 in a structuration-bearing layer 30 of hard-coated cylinder or core 10. While there may be some relatively angular rotation of cylinder or core 10 relative to a position of a laser focal point FP, given the short duration of the laser pulses, and the high repetition frequency, this relative movement can be neglected for explanatory purposes, and has no measurable effect on the repetitive ablation of the same specific location. In this variant, spherical sinks or holes 120 are ablated into the outer cylindrical surface of structuration-bearing layer 30, 36 by repetitive pulsations, a diameter of the spherical sinks or holes having an outer diameter DI, that substantially corresponds to a diameter of the sphere, to be in a range between 5 $\mu$m and 50 $\mu$m, preferably about 25 $\mu$m, and having a depth DE in a range of 2 $\mu$m and 20 $\mu$m, preferably about 10 $\mu$m.

In a further variant, laser-ablation can also be implemented by step S70 using spatial-light modulation (SLM) technique applied to an ultrashort-pulsed laser beam, similar to the ones used in S50 or S60, by using for example liquid crystal on silicon (LCOS) devices for the SLM which are controlled by a feedback-driven control mechanism. The advantage of this approach is the fact that larger surfaces can be exposed and therefore ablated at the same time that significantly improves processing throughput. This is of particular interest in an industrial production environment. A second advantage of step S70 is the possibility to correct for non-idealities in the incident laser-beam profile and to shape the outgoing profile to any pattern or form. To keep the fluence of the laser beam after the SLM procedure mentioned above, the effective power of the laser can be significantly bigger than for a single beam used in S50 or S60 while still being below the destruction limit of the modulation device, e.g., the LCOS device, while still being above the fluence ablation threshold for the material being engraved. For the laser processing steps described herein, it is possible to use a laser-based micro-structuring device using an SLM, as described in International Patent Publication No. WO2020/049519 having an international filing date of September 6, 2019.

After either one of the laser engraving steps by ablation S80, a surface roughness inside the structuration 110 has a surface profile roughness RA of 150 nm or more, generally in a range between 150 nm to 300 nm. The surface roughness is visualized with a schematic cross-sectional view shown in FIG. 3A, and shown with an exemplary reconstruction of a top perspective view of the surfaces 112, 114, 118 based on microscopic or SEM images shown in FIG. 3C. FIG. 3C shows various rugged peaks, spikes, and depressions, and fragments as remnants of the laser ablation steps S80 from the pulsed laser, leaving behind a rough surface inside the ablated surfaces of the structuration 110, 120, with different craters created by the pulsed laser beam.

To reduce the roughness of this surface, optionally a polishing step S90 can be performed. Due to the laser ablation steps S80 described herein, a resulting surface structuration of these 3D features is comparably rough, based on the melting and evaporation of the hard surface coating. Specifically, due to the relatively small focusing spot of the ablation laser, rough edges and ridges are formed, as illustrated schematically in FIG. 3A, and in FIG. 3C showing a reconstruction of microscopic images. In this step, e.g., a laser is used to process the surface of the structured hard-coated embossing roller 100. The surface of the structuration 110, 120 of the roller 100 have a surface roughness expressed by the surface roughness parameter RA of above 150 nm. The polishing step is performed in a first embodiment with a laser-processing system that uses a nanosecond pulsed-excimer laser that can emit sufficient energy to melt fragments of a superficial layer on the exposed surfaces 112, 114, 118, with limited ablation, the fragments having been caused by the laser ablation steps S80. The laser energy is absorbed by the surface, causing it to melt down to a depth of 1 $\mu$m approximately and solidifies within a few hundreds of ns. Once the upper layer portions are melted, there is a small redistribution of the material that will reduce the roughness of the exposed surfaces 112, 114, 118. This is done in multiple steps, usually by pulsing several times on the same geometrical spot, 1-10 times depending on several factors. Polishing step S90 is performed by shooting sequentially on the surface with overlapping areas to cover the completely exposed outer surface of the embossing roller 100.

For this excimer-polishing step S90, a large laser focal spot is used, for example one that is comprised between 100 $\mu$m and 300 $\mu$m. Generally, a diameter of the laser focal spot used for the polishing step S90 is substantially larger than a diameter of the laser focal spot of the laser-ablation steps S80, for example at least by a factor 10, preferably by a factor 20 to 100. Defined differently, a surface area of the laser illumination on structured hard-coated embossing roller 100 by a laser focal spot in the laser ablation steps S80 is at least 100 times smaller than a surface area of the laser illumination by the laser focusing spot the laser-polishing step. In a variant, instead of using a focusing laser beam with a large focusing spot, different optics can be used having a mask that allows for mask-based projection, for example with a round-shaped or square-shaped illumination zone having side a diameter or lengths of about 200 $\mu$m. In this variant, a diameter of the illumination zone is again at least by a factor 50 larger than a diameter of the laser focusing point of the laser ablation steps S80. As an example, the laser wavelength for the polishing step can be chosen between 128 nm and 360 nm, the laser repetition frequency can be ranging between 10 Hz and 100 Hz, and the pulse energy of the laser can be ranging between 100 mJ and 1 J per pulse. In any case, the fluence should not exceed the ablation limit of the hard-coating material.

With the polishing step S90, it is possible to provide for superior surface quality of a hard-coated embossing roller 100 as compared to the state-of-the-art. For example, despite providing for relatively large embossing structures, having a maximal depth from the upper surface 102 of embossing roller 100 of about 10 $\mu$m or more, a surface roughness is provided that is in the optical range and below, with respect to an optical wavelength $\lambda$ in a range between 380 nm and 740 nm, divided by ten (10), which is a substantial improvement over the state-of-the-art, as show schematically with the cross-sectional view of FIG. 3B, and shown with an exemplary reconstruction of a top perspective view of the surfaces 112, 114, 118, based on SEM images shown in FIG. 3D.

In this respect, a surface roughness with the surface-profile roughness parameter RA preferably reaches 60 nm, more preferably in a range between 40 nm and 60 nm. Generally, when treating a hard surface with by laser ablation in the pico- or femtosecond range, for example stainless steel or other hard metal surfaces, a surface roughness expressed by the surface profile roughness parameter RA of a range of about 600 nm to 850 nm is achieved, with different fragments form the small-scale laser ablation remaining, which is insufficient for many different applications, for example for embossing or for surface structurations having specific optical qualities, for example micro-lenses. If the hard-coating layer of an embossing roller is made of a non-metallic, inorganic coating as structure-bearing layer 30, for example a hard ceramic coating, it is possible to achieve a surface roughness expressed by the surface-profile roughness parameter RA of a range of about 150 nm to 180 nm that is better but still insufficient surface quality for engravings having optical qualities. However, with the herein described method and with step S90, it is possible to achieve a surface roughness of surfaces inside the engraving grooves, cavities, or openings that define structures 110 having a surface-profile roughness parameter RA less than 60 nm, preferably in a range between 60 nm and 40 nm or lower.

With respect to a groove 115 that is formed by ablation with step S50, S70 inside structuration-bearing layer 30, 36, as the structuration, after step S90 of polishing is performed, side walls 112 and 114 and floors 118 of groove 115 can be formed that have the herein described superior surface smoothness, specifically to provide for a surface profile roughness parameter RA less than 60 nm, preferably in a range between 60 nm and 50 nm or lower, so that not only an outer, exposed surface 102 of the roller 100 is polished, but also surfaces that lie inside the embossing structures 110 themselves. This is schematically shown with the cross-sectional view of FIG. 3B. This allows in turn guaranteeing a superior surface quality to the structures that are embossed film or foil with embossing roller 100.

With the above description a method for forming a structured embossing roller 100 have been described. In a variant, it is also possible to use the same method to form an embossing device, for example a plate 100a, substrate, or stamp, or other flat device that can be used for different types of embossing, for example thermoplastic hot embossing with a counter-plate, -substrate, -stamp, patrix/matrix embossing, cold stamping and embossing. As the ablated surface is not cylindrical but flat or planar, the ablation laser could be moved by an xyz-stage relative to the plate, substrate, or stamp, in the ablation steps S80 or by using a scanning device that projects the laser beam onto the sample surface. Preferably, this planar embossing device 100a includes a first base layer and a hard-coated layer thereon, either a single layer or a multi-layer structure, being the structuration-bearing layer 30, 36, and having a structural feature 110a, 120a formed therein.

According to another aspect of the present invention, different methods for manufacturing structured features into a hard material coating are provided, based on method of manufacturing the embossing device 100 described herein. For example, instead of the embossing device 100, either a cylindrical or planar in shape, or having other types of shapes, another type of surface-structured device can be formed by the present that can be used for other applications than embossing. As 3D structural features 110 are achieved that have a depth from the outer or upper surface of up to 20 $\mu$m, with dimensional features of the structuration in the nanometer range, this method can be used to create surface textures and shapes to hard-coated surfaces for a variety of applications, for example to provide for functional surfaces such as antibacterial surface structuration, to provide for hydrophobic or hydrophilic surfaces, thereby performing a method of providing for functional structural features to a hard-coated layer, having three-dimensional functional features. As of another aspect of the present invention, it is possible to perform a method for making a cast from the device as described herein, for example to provide for a cast having microscale or nanoscale 3D surface features, that can be used for injection molding or a cast for other types of molding. As another example, it would be possible to perform a step of forming fluidic microchannels into a substrate by the laser ablation step, providing very smooth microfluidic channels and conduct into a very hard material layer, such as TiN or CrN, so that the casting and release of thermoplastics films on the microfluidic molds can be accelerated thanks to the low adhesion provided by the smooth exposed and patterned hard-coated surface hat is formed by structurations 110 serving as a mold cavity, while at the same time enhancing the lifetime of the tooling.

According to another aspect of the present invention, as discussed above, it is possible to manufacture optical structures into structuration bearing layers 30, 36, for example by using a layered 3D structures from the ablation step S80, and thereafter polished by the polishing step S90, to create micro-lens arrays, cylindrical micro-lenses, Fresnel lenses, blazed gratings. For example, structural features 110 having a repeating sawtooth like cross-section, three-dimensional repeating ramp structures, curved structures, or stepped microstructures can be created, and the edges that are formed by the layer-wise ablation of step S50, S70 can be rounded by the polishing step S90. In addition, in the case structural features 110, 120 are used as a mold cavity of an injection tool for different types of casting methods, lines can be created to hide the seam on plastic injection tool.

According to another aspect of the present invention, it is possible to manufacture a master mold having three-dimensionally structured molding cavities that can be used for ultra-violet (UV) replication to form nano-structured components, for example for manufacturing optical lenses. The master mold manufactured by the present method by laser ablation and excimer-laser polishing as described above, and thereafter the master mold can be put into contact with a substrate, and the three-dimensionally structured molding cavities can be filled with a UV curable resin, to form nanoimprinted devices. It is possible that the resin is distributed inside the cavities by capillary forces or for example but not limited to spin-coating, spray-coating, ink-jet printing. These methods can include roll-to-roll UV replication, by the use of a master roller with the mold cavities and an unstructured counter roller, roll-to-plate, or plate-to-plate applications.

According to another aspect of the present invention, with the herein presented method, an injection mold can be manufactured, for example one that can be used for molding plastics, ceramics or metal injection molding. Due to the high process temperatures (e.g., from 100°C to 1000°C) and injection pressures (e.g., 200 bar to 800 bar) of injection-molding processes, mold surfaces, for example inner surfaces 112, 114, 118 of layer 30, 36, can be exposed to increased wear and thermal stress, and the use of hard coatings can extend a lifetime of such mold. Furthermore, providing mold surfaces with 3D structures by structural features 110, 120, the mold can yield new functionalities, for example but not limited to haptic, optic, hydrophilic applications, for the resulting injected parts from the mold, as very small structural features in the nanometer scale can be produced. As an example, the injection mold manufactured by the herein described method, can have a core 10 that may or may not be cylindrical, an adhesion layer 20, and a structuration-bearing layer 30 having a structuration 110 that forms the mold cavity with exposed surfaces 112, 114, and 118, exposed surfaces 112, 114, and 118 configured for direct contact with the injected material.

While the invention has been disclosed with reference to certain preferred embodiments, numerous modifications, alterations, and changes to the described embodiments are possible without departing from the sphere and scope of the invention, as defined in the appended claims and their equivalents thereof. Accordingly, it is intended that the invention has the full scope defined by the language of the following claims.

## Claims

1. A method for manufacturing an embossing device (100) for embossing system comprising the steps of:

   providing (S10, S20, S30) a hard-coated embossing roller having a cylindrically-shaped core (10) and a hard-coating structuration-bearing layer (30), the structuration-bearing layer having a thickness in a range of more than 5 $\mu$m and of equal or less than 30 $\mu$m; and performing laser ablation (S50, S80) to the hard-coated embossing roller to remove material from the structuration-bearing layer to form an opening, a surface of the opening forming a structural feature into the structuration-bearing layer, to form a structured hard-coated embossing roller (100).

2. The method for manufacturing an embossing device according to claim 1, further comprising the step of: polishing (S90) a surface of the structured hard-coated embossing roller by laser processing to smoothen the surfaces of the structural feature.

3. The method for manufacturing an embossing device according to claim 1, wherein in the step of performing laser ablation, the opening has a depth of more than 1 $\mu$m and less than 20 $\mu$m.

4. The method for manufacturing an embossing device according to claim 1, wherein the surface of the opening defines a three-dimensional structure.

5. The method for manufacturing an embossing device according to claim 2,
wherein in the step of polishing (S90), a surface roughness Ra of the surface of the structural feature is below 100 nm.

6. The method for manufacturing an embossing device according to claim 2,
wherein a diameter of the laser focusing spot of the laser for the polishing step is at least 10 times larger than a diameter of the laser focusing spot for the laser ablation step.

7. The method for manufacturing an embossing device according to any one of claims 1 to 6, further comprising
providing the structuration-bearing layer as a multi-layer structure.

8. An embossing device comprising:

> a base (10);
> an adhesion layer (20) arranged on the base;
> a hard-coating structuration-bearing layer (30) arranged on the adhesion layer (20), having a thickness in a range of more than 5 $\mu$m and of less than 30 $\mu$m; and
> an embossing structuration arranged in a surface of the structuration bearing layer,
> wherein the embossing structuration includes periodical structures including
>
> > gratings in a plurality of angular orientations or a matrix or dots or squares, wherein a depth of the gratings, dots and squares is between 1 $\mu$m and 10 $\mu$m,
> > and a width of the gratings, dots and squares is between 1 $\mu$m and 20 $\mu$m, and
>
> wherein the periodicity of the matrix of dots or squares is in a range between 1 $\mu$m and 10 $\mu$m.

9. The embossing device according to claim 8, wherein the ratio between the depth and the width of the structures is in a range between 0.25 and 2.

10. The embossing device according to claim 8, wherein the base includes a cylinder that is made of a metallic or composite material.

11. The embossing device according to claim 8, wherein the base includes a plate that is made of a metallic or composite material.

12. The embossing device according to any one of claims 8 to 11, wherein the structuration-bearing layer comprises a multi-layer structure.

13. An injection mold (100a) comprising:

> a base;
> an adhesion layer arranged on the base;
> a hard-coating structuration-bearing layer arranged on the adhesion layer, having a thickness in a range between 5 $\mu$m and 30 $\mu$m; and
> an embossing structuration (110a, 120a) arranged in a surface of the structuration-bearing layer,
> wherein the embossing structuration includes a mold structure.

**Patentansprüche**

1. Verfahren zur Herstellung einer Prägevorrichtung (100) für ein Prägesystem, umfassend die Schritte:

> Bereitstellen (S10, S20, S30) einer hartbeschichteten Prägewalze mit einem zylindrisch geformten Kern (10) und einer hartbeschichteten strukturierungstragenden Schicht (30), wobei die strukturierungstragende Schicht eine Dicke in einem Bereich von mehr als 5 $\mu$m und gleich oder weniger als 30 $\mu$m aufweist; und
> Durchführen von Laserabtragung (S50, S80) an der hartbeschichteten Prägewalze, um Material von der strukturierungstragenden Schicht zu entfernen, um eine Öffnung zu bilden, wobei eine Oberfläche der Öffnung ein Strukturmerkmal in der strukturierungstragenden Schicht bildet, um eine strukturierte hartbeschichtete Prägewalze (100) zu bilden.

2. Verfahren zur Herstellung einer Prägevorrichtung nach Anspruch 1, ferner umfassend den Schritt:
Polieren (S90) einer Oberfläche der strukturierten hartbeschichteten Prägewalze durch Laserbearbeitung, um die Oberflächen des Strukturmerkmals zu glätten.

3. Verfahren zur Herstellung einer Prägevorrichtung nach Anspruch 1,
wobei in dem Schritt des Durchführens von Laserabtragung die Öffnung eine Tiefe von mehr als 1 $\mu$m und weniger als 20 $\mu$m aufweist.

4. Verfahren zur Herstellung einer Prägevorrichtung nach Anspruch 1,
wobei die Oberfläche der Öffnung eine dreidimensionale Struktur definiert.

5. Verfahren zur Herstellung einer Prägevorrichtung nach Anspruch 2,
wobei in dem Schritt des Polierens (S90) eine Oberflächenrauheit Ra der Oberfläche des Strukturmerkmals unter 100 nm liegt.

6. Verfahren zur Herstellung einer Prägevorrichtung nach Anspruch 2,
wobei ein Durchmesser der Laserfokussierungsstelle des Lasers für den Polierschritt mindestens 10 mal größer als ein Durchmesser der Laserfokussierungsstelle für den Laserabtragungsschritt ist.

7. Verfahren zur Herstellung einer Prägevorrichtung nach einem der Ansprüche 1 bis 6, ferner umfassend Bereitstellen der strukturierungstragenden Schicht als Mehrschichtstruktur.

8. Prägevorrichtung, umfassend:

eine Basis (10);
eine Haftschicht (20), die auf der Basis angeordnet ist;
eine auf der Haftschicht (20) angeordnete hartbeschichtete strukturierungstragende Schicht (30) mit einer Dicke in einem Bereich von mehr als 5 $\mu$m und von weniger als 30 $\mu$m; und
eine Prägestrukturierung, die in einer Oberfläche der strukturierungstragenden Schicht angeordnet ist,
wobei die Prägestrukturierung periodische Strukturen einschließt, die Gitter in einer Vielzahl von Winkelausrichtungen oder eine Matrix oder Punkte oder Quadrate einschließen,
wobei eine Tiefe der Gitter, Punkte und Quadrate zwischen 1 $\mu$m und 10 $\mu$m liegt und eine Breite der Gitter, Punkte und Quadrate zwischen 1 $\mu$m und 20 $\mu$m liegt, und
wobei die Periodizität der Matrix von Punkten oder Quadraten in einem Bereich zwischen 1 $\mu$m und 10 $\mu$m liegt.

9. Prägevorrichtung nach Anspruch 8, wobei das Verhältnis zwischen der Tiefe und der Breite der Strukturen in einem Bereich zwischen 0,25 und 2 liegt.

10. Prägevorrichtung nach Anspruch 8, wobei die Basis einen Zylinder einschließt, der aus einem metallischen oder Verbundmaterial hergestellt ist.

11. Prägevorrichtung nach Anspruch 8, wobei die Basis eine Platte einschließt, die aus einem metallischen oder Verbundmaterial hergestellt ist.

12. Prägevorrichtung nach einem der Ansprüche 8 bis 11, wobei
die strukturierungstragende Schicht eine Mehrschichtstruktur umfasst.

13. Spritzgussformwerkzeug (100a), umfassend:

eine Basis;
eine Haftschicht, die auf der Basis angeordnet ist;
eine auf der Haftschicht angeordnete hartbeschichtete strukturierungstragende Schicht mit einer Dicke in einem Bereich zwischen 5 $\mu$m und 30 $\mu$m; und
eine Prägestrukturierung (110a, 120a), die in einer Oberfläche der strukturierungstragenden Schicht angeordnet ist,
wobei die Prägestrukturierung eine Formwerkzeugstruktur einschließt.

## Revendications

1. Procédé de fabrication d'un dispositif de gaufrage (100) pour un système de gaufrage comprenant les étapes suivantes :

obtention (S10, S20, S30) d'un cylindre gaufreur à revêtement dur ayant un cœur de forme cylindrique (10) et une couche porteuse de structuration de revêtement dur (30), la couche porteuse de structuration ayant une épaisseur dans une plage supérieure à 5 $\mu$m et inférieure ou égale à 30 $\mu$m ; et
réalisation d'une ablation laser (S50, S80) sur le cylindre gaufreur à revêtement dur pour retirer de la matière de la couche porteuse de structuration afin de former une ouverture, une surface de l'ouverture formant une caractéristique structurale à l'intérieur de la couche porteuse de structuration, pour former un cylindre gaufreur à revêtement dur structuré (100).

2. Procédé de fabrication d'un dispositif de gaufrage selon la revendication 1, comprenant en outre l'étape suivante :
polissage (S90) d'une surface du cylindre gaufreur à revêtement dur structuré par traitement laser pour lisser les surfaces de la caractéristique structurale.

3. Procédé de fabrication d'un dispositif de gaufrage selon la revendication 1,
dans lequel, à l'étape de réalisation d'une ablation laser, l'ouverture a une profondeur de plus de 1 $\mu$m et moins de 20 $\mu$m.

4. Procédé de fabrication d'un dispositif de gaufrage selon la revendication 1,
dans lequel la surface de l'ouverture définit une structure tridimensionnelle.

5. Procédé de fabrication d'un dispositif de gaufrage selon la revendication 2,
dans lequel, à l'étape de polissage (S90), une rugosité de surface Ra de la surface de la caractéristique structurale est inférieure à 100 nm.

6. Procédé de fabrication d'un dispositif de gaufrage selon la revendication 2,

dans lequel un diamètre de la tache de focalisation laser du laser pour l'étape de polissage est au moins 10 fois plus grand qu'un diamètre de la tache de focalisation laser pour l'étape d'ablation laser.

7. Procédé de fabrication d'un dispositif de gaufrage selon l'une quelconque des revendications 1 à 6, comprenant en outre

l'obtention de la couche porteuse de structuration sous la forme d'une structure multicouche.

8. Dispositif de gaufrage comprenant :

une base (10) ;
une couche d'adhérence (20) disposée sur la base ;
une couche porteuse de structuration de revêtement dur (30) disposée sur la couche d'adhérence (20), ayant une épaisseur dans une plage supérieure à 5 $\mu$m et inférieure à 30 $\mu$m ; et
une structuration de gaufrage disposée dans une surface de la couche porteuse de structuration,
dans lequel la structuration de gaufrage comporte des structures périodiques incluant des réseaux dans une pluralité d'orientations angulaires ou une matrice de points ou de carrés,
dans lequel une profondeur des réseaux, points et carrés se situe entre 1 $\mu$m et 10 $\mu$m, et une largeur des réseaux, points et carrés se situe entre 1 $\mu$m et 20 $\mu$m, et
dans lequel la périodicité de la matrice de points ou carrés se situe dans une plage comprise entre 1 $\mu$m et 10 $\mu$m.

9. Dispositif de gaufrage selon la revendication 8, dans lequel le rapport entre la profondeur et la largeur des structures se situe dans une plage comprise entre 0,25 et 2.

10. Dispositif de gaufrage selon la revendication 8, dans lequel la base comporte un cylindre qui est constitué d'un matériau métallique ou composite.

11. Dispositif de gaufrage selon la revendication 8, dans lequel la base comporte une plaque qui est constituée d'un matériau métallique ou composite.

12. Dispositif de gaufrage selon l'une quelconque des revendications 8 à 11, dans lequel
la couche porteuse de structuration comprend une structure multicouche.

13. Moule d'injection (100a) comprenant :

une base ;
une couche d'adhérence disposée sur la base ;

une couche porteuse de structuration de revêtement dur disposée sur la couche d'adhérence, ayant une épaisseur dans une plage comprise entre 5 $\mu$m et 30 $\mu$m ; et
une structuration de gaufrage (110a, 120a) disposée dans une surface de la couche porteuse de structuration,
dans lequel la structuration de gaufrage comporte une structure de moule.

FIG. 1A

EP 4 208 335 B1

FIG. 1B

FIG. 2A

FIG. 2B

FIG. 3A

FIG. 3B

FIG. 3C

FIG. 3D

FIG. 3E

FIG. 3F

FIG. 4

Front view

Side view

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 9579924 B
- US 8435373 B
- US 9993895 A
- US 10183318 B
- US 20170066079 A
- WO 2020049519 A

### Non-patent literature cited in the description

- **PENG et al.** Micro Hot Embossing of Thermoplastic Polymers: a Review. *Journal of Micromechanics and Microengineering*, 2013, vol. 24 (1), 013001
- **LANG et al.** Shark Skin Drag Reduction. *Encyclopedia of Nanotechnology*, 2012, vol. 19, 2394-2400
- **OLANREWAJU et al.** Capillary Microfluidics in Microchannels: From Microfluidic Networks to Capillary Circuits. *Lab on a Chip*, 2018, vol. 18 (16), 2323-2347